# EUROPEAN PATENT SPECIFICATION

(11) **EP 1 436 192 B1**
(45) Date of publication and mention of the grant of the patent: **02.07.2008**
(21) Application number: 02763673.7
(22) Date of filing: 20.09.2002
(51) Int. Cl.: B63H 9/04

(54) **CAST COMPOSITE SAIL AND METHOD**
GEGOSSENES VERBUNDSEGEL UND VERFAHREN
VOILE EN COMPOSITE MOULE ET PROCEDE DE FABRICATION

(30) Priority: 20.09.2001 US 323428 P
(43) Date of publication of application: 14.07.2004
(73) Proprietor: Omohundro, Thomas W., Minden, NV 89423 (US)
(72) Inventor:
(74) Representative: Leeming, John Gerard
(86) International application number: PCT/US2002/029904
(87) International publication number: WO 2003/024779

(56) References cited:
- WO-A-90/06849
- WO-A-94/11185
- JP-A- 61 129 395
- US-A- 4 708 080
- US-A- 5 097 783
- US-A- 5 097 784
- US-A- 5 161 479
- US-A- 5 355 820
- US-A- 5 403 641
- US-B1- 6 332 420
- US-B1- 6 382 120

## Description

### BACKGROUND OF THE INVENTION

The present invention relates to sails and more particularly, to a process and apparatus for casting sails and the reinforced sails produced thereby.

Sails are three dimensional (solid, rather than plane) surfaces. They are so to provide "lift" for the sailplan and therefore for the sailboat. Presently, substantially all sails are because of their size, traditionally, made of panels or sections which are arranged in one way or another, usually at the discretion of a sail designer.

When placed on a planar surface such as a floor and when in use and set upon the sailplan, most sails exhibit a distinct element of vertical camber throughout. The body of the sail performs three missions. First, it separates its high pressure side from its low pressure side. Second, it supports the sail's internal structure and retains its structural elements and members in the exact positions which they are intended to occupy. Third, it provides the sail with the durability and resilience which is illustrated in a tendency to resist damage from tearing, from creasing and folding, from vibrating (luffing) in the wind, and from chafing against the sailplan's components such as mast, standing rigging and lifelines.

The current state of the sail manufacturing art results in a sail product whose body is a sandwich-type construction. Specifically, such sails are comprised of a skeletal structure of load-bearing fibers or yarns which is covered on each side by layers of polyester film, woven taffeta materials, or both. The outside layers are fastened to the internal skeletal yarn structure and to each other by the use of adhesives and/or by the application of heat and pressure in the manufacturing process. Sails employing the concepts of these patents are now employed widely and particularly by racing yachts.

Conrad United States Letters Patent No. 4,708,080 pioneered development in the realm of structural sail technology, articulated the theoretical difference between a sail's structure and its skin or body and defined the nature of the structural system within a sail. However, the method of fabrication utilized in this patent involved the use of panels which were assembled and to which structural yarns were subsequently applied.

In Goldspar PCT application PCT/AU87/00144, there is proposed a method for casting a sail from liquid synthetic resin using a mold comprised of numerous sections which can be altered in position to establish the desired sail contour. Obviously, the size of the sails which may be produced is limited by the size of the mold, and the costs of fabricating such a mold. Moreover, there is no reinforcement provided in such a cast structure.

In Baudet U. S. Patent No. 5,097,784, the patentee discloses a process for making a sail in which panels are assembled into a substrate and draped over a table configurable to the contours desired for the sail. Reinforcing yarns or fibers are laid onto the substrate in a pattern. This process involves costly and time consuming initial steps of precutting and then carefully assembling the panels to provide the substrate which will then assume the contours of the table.

It is an object of the present invention to provide a novel method for the casting of a seamless sail in one piece.

It is also an object to provide such a method in which reinforcing yarns or fibers are readily disposed in a matrix of resin to provide substantially smooth surface skins.

Another object is to provide such a method which reliably produces reinforced sails with desirable characteristics and at reasonable cost.

Yet another object is to provide novel apparatus for casting such sails and which is readily configurable for sails of different contours and sizes.

A further object is to provide a cast tri-cornered sail having a foot with a clew and a tack, a head and luff and leech edges extending therebetween, said sail including an integrally formed, seamless cast body; characterised in that
said body has substantially smooth surfaces and a synthetic resin matrix in which are embedded structural yarns extending from the clew to the head and to the luff edge.

### SUMMARY OF THE INVENTION

It has now been found that the foregoing and related objects may be readily attained in a novel method for fabricating a sail having a foot with a clew and a tack and a head, and luff and leech edges extending therebetween. A flexible carrier is transported over a segmented support and a coating of liquid synthetic resin is deposited on the carrier in a predetermined pattern conforming substantially to the desired configuration for the sail.

The segments of the support are moved to shape the carrier and coating into the predetermined contour for the transverse portion of the sail disposed thereon concurrently with passage of the carrier thereover. The segments are formed progressively over the length of the support to conform with the predetermined contours of the sail being fabricated and passing thereover.

Structural yarns are deposited on the coating in a predetermined pattern, and additional liquid synthetic resin is applied to provide the desired depth for the coating corresponding substantially to the desired thickness for the sail and to encapsulate the structural yarns.

The resin is at least partially cured on the carrier to produce a composite sail body or structure having the desired configuration and contours with the structural yarns being embedded in the at least partially cured resin. The composite sail structure is removed from the carrier and the sail structure is trimmed to conform to the desired tri-cornered sail.

Preferably, the resin is initially deposited on the carrier as it is being transported in a width corresponding substantially to the predetermined foot of the sail, and thereafter the width of the liquid synthetic resin coating being deposited on the carrier is gradually reduced until deposition is terminated at the predetermined head of the sail.

Desirably, the deposited resin coating is smoothed to a desired thickness before the step of depositing the structural yarns thereon.

Generally, the carrier is formed by the segments to the desired transverse curvature prior to the smoothing step and the smoothing is effected by a wiper having a curvature conforming to the predetermined transverse curvature of the sail at the location of the wiper. Desirably, the step of depositing the structural yarns includes wiping the structural yarns onto the coating, and some of the structural yarns extend from the clew to the head of the sail. Preferably, some of the structural yarns extend from the clew to a multiplicity of points along the luff edge of the sail.

In the preferred process, reinforcing yarns are deposited in the coating prior to the step of depositing structural yarns in the coating, and these reinforcing yarns generally extend transversely between the leach and luff. Desirably, the reinforcing yarns are angularly oriented relative to the horizontal.

Depending upon the length of the foot of the sail and the available width of the carrier film, the width of the carrier will generally be comprised of overlapping strips.

Preferably, the step of initiating at least a partial cure of the resin includes exposing the resin of the coating to ultraviolet radiation. Generally, a flexible top film is applied over the coating and is applied on the surface of the top film. Thereafter, the assembly of the films and coating is calendared prior to the curing step. After the curing step, the assembly of films and coating is removed from the support. If not fully cured, the resin is allowed to cure completely prior to removal of the carrier and top films from the sail structure and prior to the trimming step.

Following removal of the film and the trimming steps, additional elements are applied to the sail structure. In larger headsails, one of the additional elements is a reinforcing panel applied and bonded along the foot of the sail, and this panel includes reinforcing yarns arching between the tack and clew. For mainsails, additional elements include reinforcing strips applied and bonded at the desired locations for reef points and in which apertures are cut and grommets bonded thereto.

To preclude propagation of tears, the method may include a step of depositing and embedding small fibers in the coating.

If the resin is not completely cured when removed from the support, the assembly of films and coating may be hung vertically for a period of time to ensue complete curing of the resin of the coating.

The sail making apparatus includes roll support means for supporting at least one roll of carrier film, and a segmented support comprised of a multiplicity of movable segments which provide a planar support surface and are movable to provide a transversely curved support surface. Drive means is provided to move the segments in accordance with predetermined movements to generate the desired transverse curvature in the carrier film passing thereover. Carrier film pulling means unrolls the carrier film and moving it onto and over the length of the elongated support in a machine direction, drive means controls the motion of the pulling means. Liquid resin dispensing means is provided above the support for dispensing liquid resin to provide a coating of liquid resin on the carrier film in a predetermined width which is variable to reflect the intended transverse dimension of the body of the sail being cast on the carrier film as it moves thereby.

Transverse yarn laying means above the support lays synthetic resin yarns into the resin coating, and the laying means being movable generally transversely of the support. Structural yarn laying means is provided above the support for laying into the resin coating a multiplicity of synthetic resin yarns in a predetermined pattern extending generally in the machine direction. Second liquid resin dispensing means above the support dispenses liquid resin onto the coating to provide a predetermined thickness for the coating and to fully encapsulate the yarns. Top film applying means applies a top film over the coating and yarns, and thereafter calendering means calenders the assembly of films, coating and yarns. Curing means then applies energy to the resin of the coating to effect at least partial curing thereof.

The transverse yarn laying means presses the transverse yarns into the coating, and the structural yarns laying means wipes the structural yarns onto the coating.

Similarly, the calendering means is configurable to conform to the curvature of the support thereunder. The structural yarn laying means is movable transversely of the support.

The resultant cast tri-cornered sail had a foot with a clew and a tack, a head and luff and leech edges extending therebetween. The sail includes an integrally formed, seamless cast body with substantially smooth surfaces, and the body has a synthetic resin matrix in which are embedded structural yarns extending from the clew to the head and to the luff edge.

Preferably, the synthetic resin of the matrix is a thermosetting resin and the structural yarns are fabricated from a high modulus resin. A multiplicity of reinforcing yarns extending generally transversely from luff to leech, and the reinforcing yarns are angularly oriented relative to the edges of the sail. Reinforcing elements bonded to the body at the head and the foot of the sail. Reef points are generally provided by a reinforcing strip extending across the body from leech to luff and the reef points are disposed therein. In large sails, a reinforcing panel is bonded to the body and extends across the foot. This panel having structural yarns embedded therein and extending between the tack and clew.

As can be readily understood, the substance or body of the sail itself is made from a plastic resin. The internal stress distribution skeletal structure of yarns is made either from a material of moderate modulus, such as polyester or Pentex (WHO), or from a material of relatively high modulus, such as Twaron (-----), Kevlar(-----), (VECTRAN---), Specta (-----) carbon an/or graphite fiber.

The system which inhibits tear proliferation is most often made from yarns of materials of moderate modulus, such as polyester, because of what can be termed the "gauze-effect". Such materials, when stressed directly, immediately collect upon each other and hence possess an ability to arrest an incipient catastrophic tearing or ripping.

Components such as additional reinforcing of corners are made from plastic resin and materials common to the internal stress distribution structure itself. Compression members are initially made from a glass fiber and epoxy combination.

The sail is constructed in such a way that by the use of resins, an ever-changing computer driven form, and a process of continuous motion, a structural sail without panels is created. In addition, during this process, the internal structure is put in place, and a "solid" or three dimensional definition is applied to the sail. All of the sail's basic elements are created within it simultaneously. The entire sail is constructed from its basic material elements - plastic resins and high modulus fibers - in one continuous and computer driven process. The elapsed time of this process as it relates to a single sail from the inputting of a specifications to absolute completion, is a mere fraction of that illustrated by current sail manufacturing processes and technologies.

Additionally, the sail is constructed in such a way that it (or, more specifically, its body) is completely devoid of panels or sections of any sort. The sail is constructed in such a way that it has a structural load-bearing system, applied without the use of adhesives and without the layering of films, taffetas, and the like, which is encapsulated in the sail's skin. The structural system is completely and totally encapsulated in the sail body, which itself is, from side-to-side (or top to bottom), without layers. Only the primary load-bearing system and yarns which inhibit tearing lie inside it. However, they are literally "in it" rather than sandwiched between layers "of it". The sail is constructed in such a way as the sail body can be tapered from back to front (or from leech to luff). Such specific alteration of the thickness of the sail body within a sail can be advantageous, as often and the back of the sail(the leech) is subjected to far more abuse, wear and tear, and dynamic loads than is the front of the sail (the luff).

### BRIEF DESCRIPTION OF THE ATTACHED DRAWINGS

Figure 1 is an elevational view of a jib sail fabricated in accordance with the present invention and utilizing a preferred skeletal structure of transverse yarns and structural yarns;
Figure 2 is an elevational view of a mainsail fabricated in accordance with the present invention and showing only the structural yarns;
Figure 3 is a fragmentary cross sectional view to an enlarged scale showing the three dimensional character of a sail and the structural yarns encapsulated therein;
Figure 4 is a schematic illustration of an installation for practicing the method of the present invention to produce a seamless sail body;
Figure 5 is a front elevational view of an array of roll stands providing an unwind assembly for the carrier film;
Figure 6A is a front elevational view of the clamping mechanism for drawing the carrier films;
Figure 6B is a side elevational view thereof;
Figure 7A is a fragmentary front elevational view of a resin dispensing conduit assembly disposed on a planar support segment;
Figure 7B is a similar view of the conduit flexed arcuately to conform to the curvature of underlying support segment;
Figure 8A is a front elevational view of a flexible wiper flexed to conform to the support segment;
Figure 8B is a side elevational view showing the wiper drawn to an enlarged scale;
Figure 9A is a side elevational view of the reinforcing yarn application devices;
Figure 9B is a front elevational, view of the structural yarn application devices;
Figure 9C is a side elevational view thereof;
Figure 9D is an enlarged view thereof showing the fingers for pressing the yarns into the coating;
Figure 10A is a front elevational view of the oil dispenser with the conduit in an unflexed state;
Figure 10B is a fragmentary view with the conduit flexed to conform to the segment;
Figure 11 is a schematic illustration of an installation in which small fibers are dispersed into the resin coating to provide tear resistance;
Figure 12A is a fragmentary view of the support table with a segment in planar position;
Figure 12B is a similar view with the segment flexed into a convex position; and
Figure 13 is a flow chart showing the computer control of the various motors, pumps, valves and radiation sources.

### DETAILED DESCRIPTION OF THE ILLUSTRATED EMBODIMENTS

The manufacturing process utilizes software which, from the taking of the order and the subsequent input of a very few independent variables, creates and defines all the elements of a specific sail - its profile, its three dimensional character, the substance of its body, the nature of its load bearing structure, and the definitions and placements of its details. Such software is currently used to enable the assembling of panels to produce sail structures. Such software is modified and augmented in the present invention to control the operation of various pumps and motors to produce the entire sail body in a continuous casting operation which is described in detail hereinafter.

The production line and the initial machine and machine related components which comprise it are equal in width to the width of the largest sail intended to be fabricated thereby. For convenience, the width of a versatile installation is established as approximately thirty-five (35) feet (10,6mts) for sails of moderate and moderately large sizes and is essentially equal in length to the foot lengths of the larger sails placed in production. For the specific production of smaller sails, the machine's width can obviously be somewhat smaller and for very large sails it can exceed thirty-five (35) feet. The sail is constructed by the production line in a "foot" (or bottom) first" attitude.

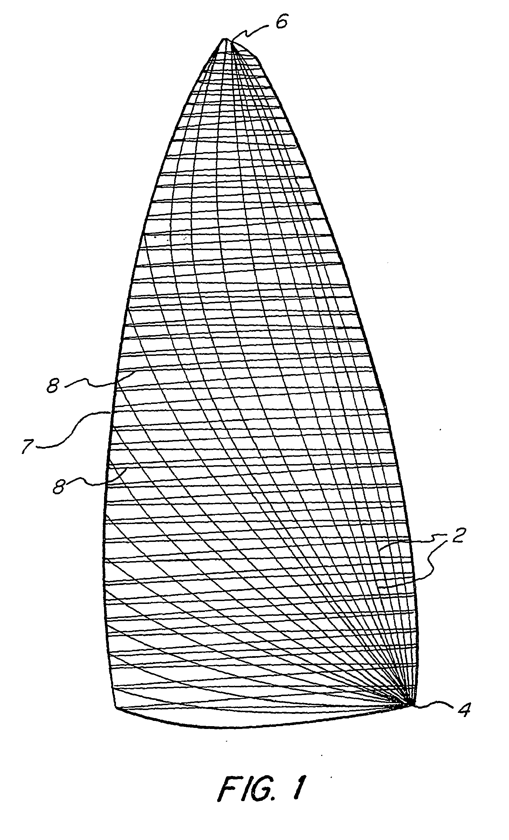

Turning first to Figure 1, there illustrated is a jib sail made in accordance with the present invention and having structural yarns 2 emanating at the clew 4 and extending upwardly to the head 6 and to various points along the luff 7. Diagonal reinforcing yarns 8 extend angularly between the leach 9 and the luff 7.

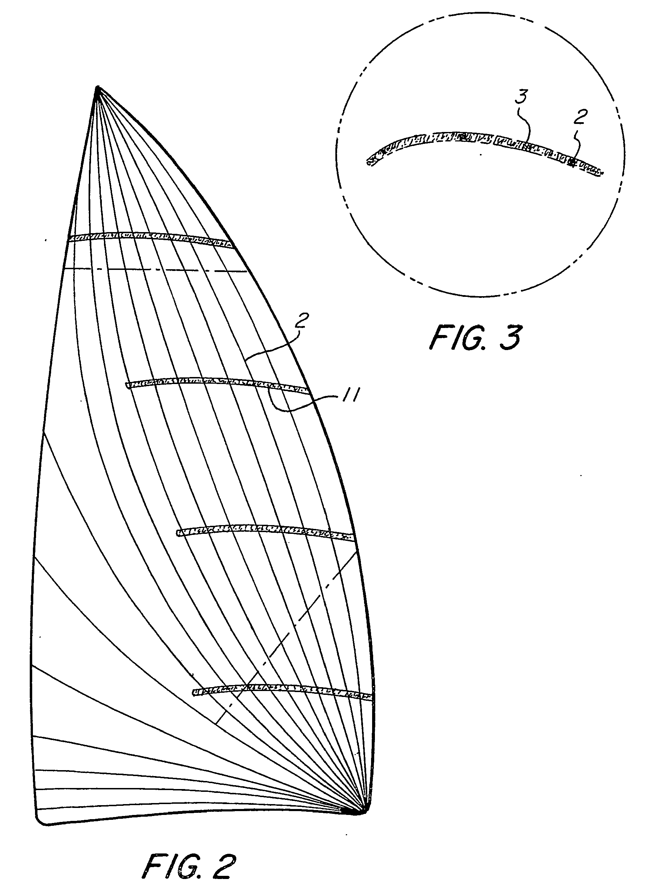

Figure 2 illustrates a head sail with only the structural yarns 2 depicted and having batten pockets 11.

Figure 3 is an enlarged fragmentary section showing structural yarns 2 embodied in the resin matrix 3.

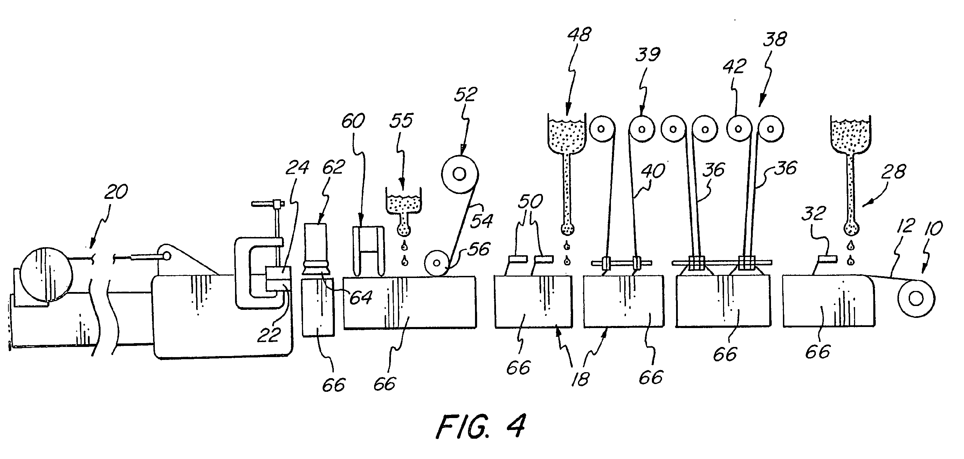

Turning next to Figure 4 of the attached drawings, therein illustrated schematically is a casting installation for making sails in accordance with the present invention and having as the first station within the production line an unwind array generally designated by the numeral 10 from which sections of plastic film 12, each approximately seven (7) feet in width, are "let-off".

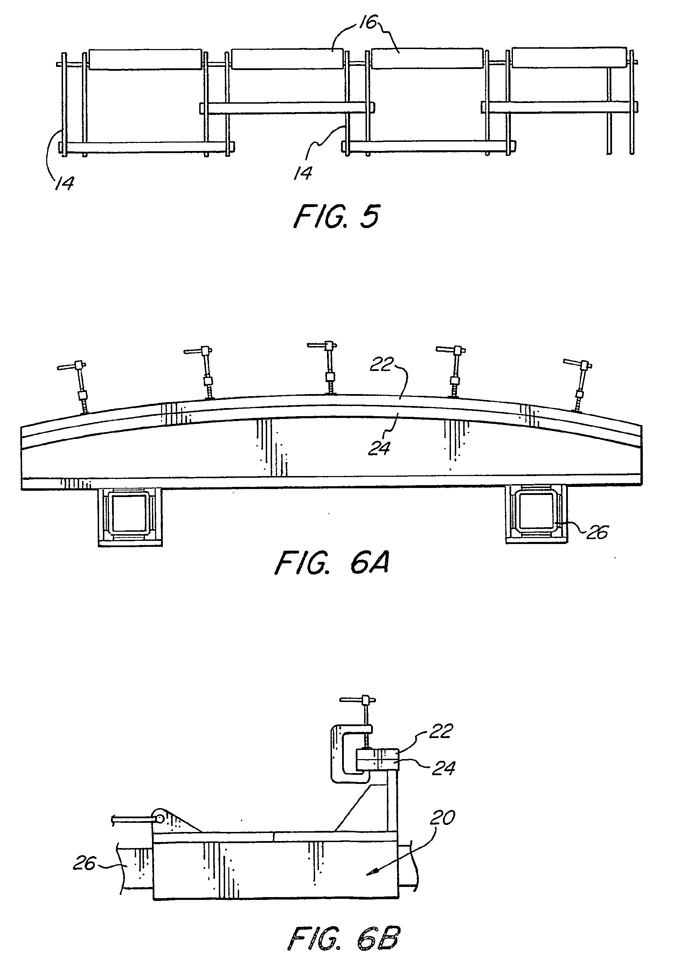

As seen in Figure 5, the unwind is separated into four individual unwinds or roll stands 14 each supporting a roll 16 of film. These individual unwinds 14 are placed one behind the other in a machine direction so that the edges of adjacent rolls 16 of film overlap each other in amounts of approximately three (3) inches. The number of rolls and roll stands employed depends upon the maximum width (the foot length) of the specific sail in production. This film is a carrier which will transport the plastic sail body through the continuous flow process.

The installation includes a series of supports and generally designated by the numeral 18 providing a platform over which the carrier film 12 passes, and a series of stations therealong at which various operations are performed as will be described hereinafter.

Spaced at the far end of the production line from the leading unwind is a clamping and drawing mechanism generally designated by the numeral 20 and shown in detail in Figure 6. This apparatus consists of a lower clamp element 22 which has a surface greater than the width of the sail and a length in the machine direction of approximately three (3) inches and an upper clamp element 24 on top of this surface which, by exerting pressure on the surface below it, holds the leading edge of the carrier film 12 in place. The clamping elements 22, 24 are somewhat flexible over their entire width in that they can assume a curved or convex form over their width. The nature of this arcuate form is controlled by the computer software described previously. This clamping and drawing mechanism 20 includes a set of rails 26 along which the clamps 22,24 will move as they pull the carrier film 12 from the unwinds 10. The speed of the travel of the clamping mechanism 20 in the machine direction is controlled by the computer software. The maximum length of its travel coincides with the anticipated tallest sail to be produced by this installation.

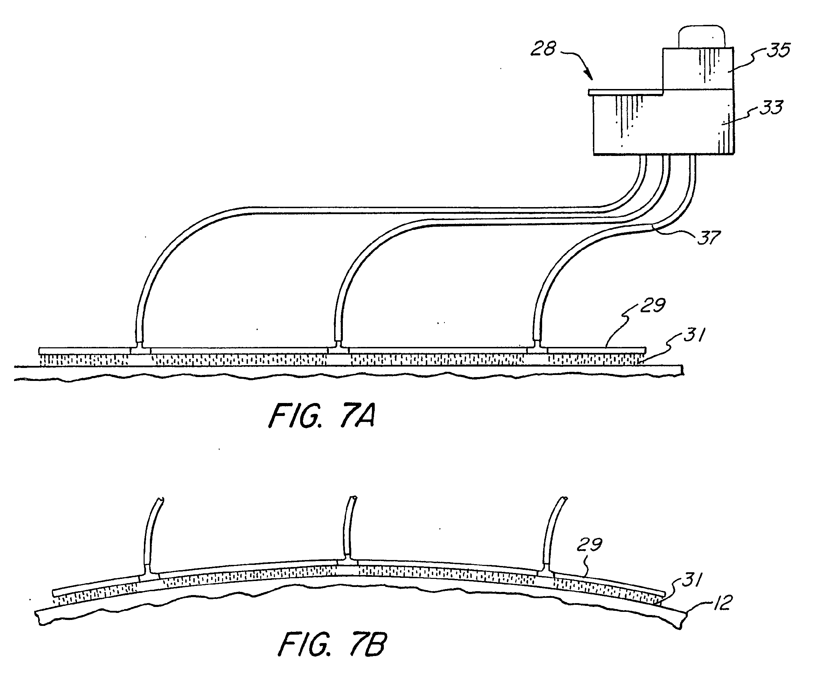

As seen in Figures 4 and 7, immediately in front of the unwinds 10, or the first station in the machine direction, is a conduit assembly generally designated by the numeral 28 and having a length of thirty-five (35) feet (10,6mts). The flexible conduit 29 has apertures in its lower surface through which the resin is dispensed onto the surface of the carrier 12 to provide a coating 31. This tubular conduit 29 lies just above the surface of the carrier 12, and the resin is driven through the conduit assembly 28 and fed from the supply 33 by the pumps 35 through the tubes 37. The resin is in amounts regulated by the computer software.

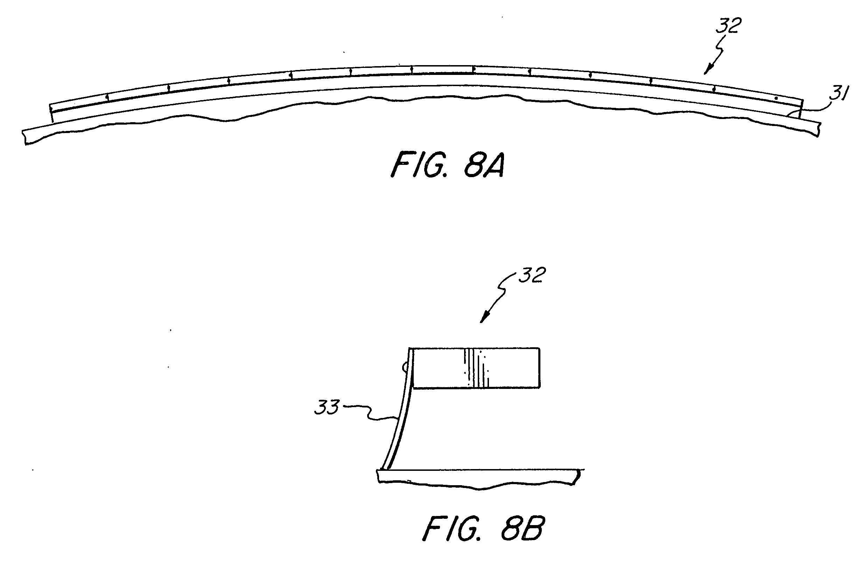

Adjacent to the conduit 29 in the machine direction is a flexible wiper seen in Figures 8A and 8B generally designated by the numeral 32. This wiper 32 is thirty-five (35) feet (10,6mts) in length and approximately one and one-half (1-1/2) (25,4-12,7mm) inches high. The relatively flexible wiper blade 33 smooths out the resin coating 31 which has been dispensed upon the carrier 12 so that there is an even coating of material.

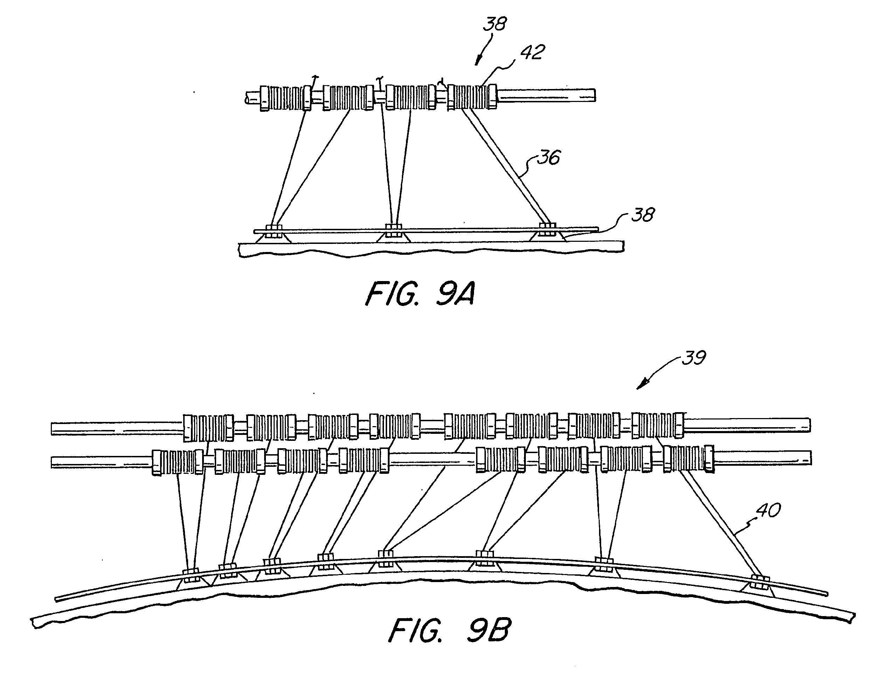

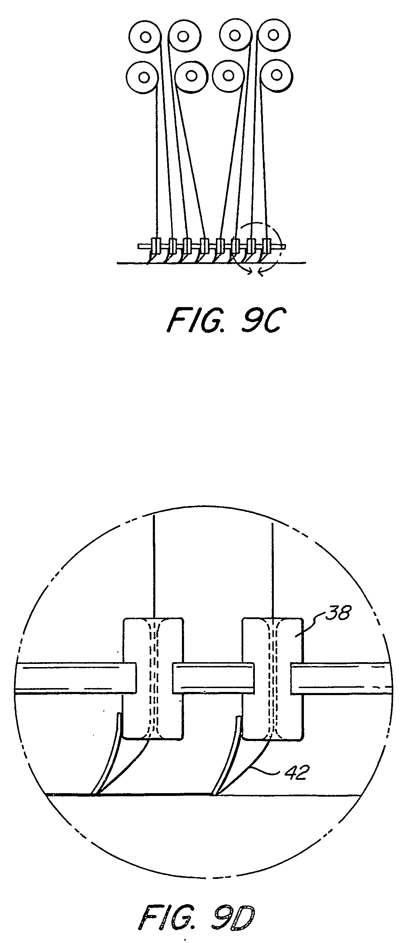

As seen in Figures 1 and 9, the next station contains a series of computer driven reinforcing yarn applicators which are schematically illustrated and generally designated by the numeral 38. The reinforcing yarns 36 are dispensed onto the coating 31 from the rolls 42. The applicator heads 42 have motors to draw the yarns and lay the yarn into the coating 31. The applicators 38 are supported and driven across the machine direction so that they can travel across the film 12 and lay the yarns in the angular pattern seen in Figure 1 and extending between leech and luff.

At the next station is another set of yarn applicators generally designated by the numeral 39 which place the structural primary load bearing or structural yarns 40 upon the carrier 12 and into the resin coating 31. The exact positions of the applied yarns at every moving point on the coated carrier 12 are determined by the software described above. Each applicator head 38 has a set of orifices through which the yarns 36,40 are driven by an individual stepping motor (not shown). There is a small flexible wiper 42 adjacent each set of orifices which presses each dispensed yarn into the coating on the carrier.

Some of the structural yarn applicators 39 are movable transversely of the carrier 12 so that, the structural yarns 40 are lain in a direction extending towards the luff edge of the sail as indicated in Figure 1.

It will be appreciated that the transverse motion of the applicat9ors 38 back and forth between the luff and leech edges will be relatively rapid.

At the next station is a second tubular conduit assembly generally designated by the numeral 48 and essentially identical to the one immediately following the unwind 10. A second portion of resin is driven through this device in volumes prescribed by the computer software to provide the desired depth for the coating 31 and to encapsulate the yarns 36, 40.

Adjacent thereto are flexible wipers 50 to smooth the coating and similar to that installed adjacent to the first tubular dispensing conduit 28.

Next in line is a second unwind array generally designated by the numeral 52 which is setup and installed in much the same manner as is the unwind array 10 from which the carrier 12 was supplied. This array is above the other components and from this unwind array 52 comes the top or cover film 54, which is identical to the initial (or underside) carrier material 12. The coated carrier 12 and top cover film 54 are passed under a roll 56 (whose pressure is adjustable) and the top film 54 is pressed onto the upper surface of the now enhanced coating 31. This top film has been initially led under the roll 56 along with the carrier film 12 and both are clamped in the clamp assembly 20 so that they move in unison.

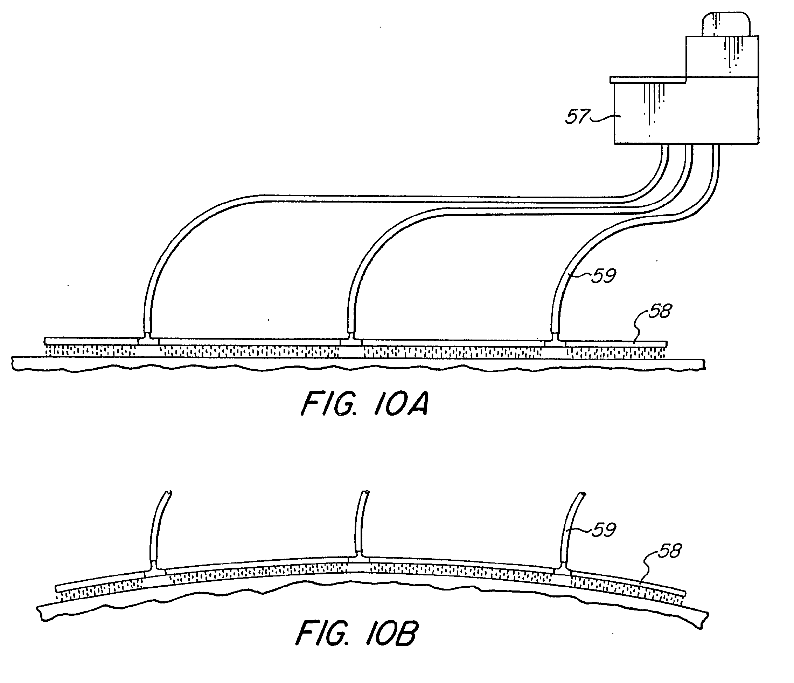

Immediately after this top film 54 is applied, a very fine coating of lubricating oil applied to the upper surface of the top film 54 by applicator generally designated by the numeral 55. As seen in Figure 10 oil is pumped from the tank 57 through the tubes 59 to the flexible conduit 58.

The assembly of film and resin is passed through a calendering station generally designated by the numeral 60 which presses the assembly to the desired thickness and expels air from the coating 31.

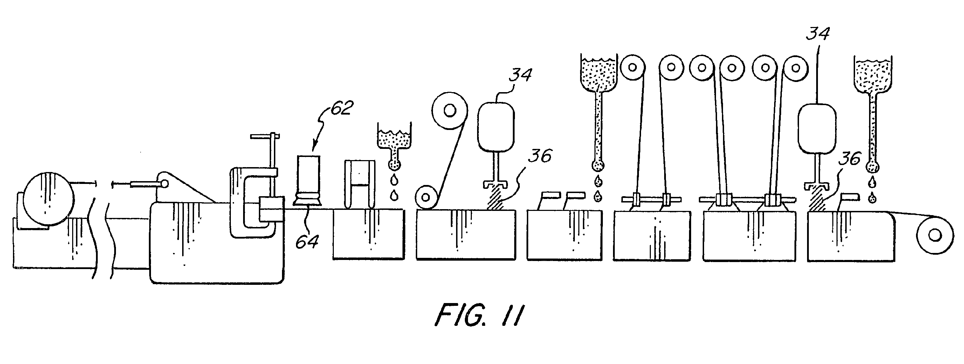

Illustrated in Figure 11 is a modified installation in which there are optional stations which have a series of spray heads 34 -- which spray a predetermined volume of small fibers 36 (nylon, polyester, aramid, or the like), which may range in length from one-half (1/2) inch (12,7mm) to one (1) inch (25,4mm) in length, onto and into the smooth coating of resin. The volume of fibers 36 dispensed is controlled by the software referred to previously. Because the speed of carrier 12 and coating in the machine direction is relatively slow, these fibers 36 can become immersed within the coating 31 as well as remain on its surface. The purpose of these fibers is to provide strong resistance to tear proliferation to the body of the sail.

Following the calendering station, the coated carrier assembly is passed through a curing station which will have a multiplicity of radiation heads generally designated by the numeral 62 and shields 64 about their lower ends. The resin of the coating 31 is exposed to sufficient radiation for at least substantial, if not complete, curing to set the sail body in its predetermined form.

As previously described, the several stations are located along the support member 18 which is a computer driven device to apply the three dimensional component to the sail. This support member 18 is a segmented platform which is at least thirty-five (35) feet wide, and it is as long as the distance from the first tubular resin dispensing device to the far end of the radiation curing station, and it can extend still further if so desired. This segmented platform is divided into a multiplicity of generally horizontal segments 66, each thirty five (35) feet (10,6 mts) in the transverse direction and 0.3-1.5 feet (0,09-0,45 mts) in the machine direction. As described in detail hereinafter, these segments 66 may be flexed in the transverse direction to provide the curvature for the sail body along its length as controlled by the computer.

Each segment 66 assumes the exact definition of the computer conceived three dimensional sail as specific sections of the carrier 12 pass over it. It is the convex attitude which the sections of this platform take which renders a three dimensional component to the end product which is the sail as a whole. As the carrier film 12 and initial plastic resin coating 31, and then the upper and lower films 12, 54 and the full plastic resin coating 31 which resides between the films, pass over the sections of this platform in the machine direction, the computer software regulates the required definition of the convexity of the segments 66 of the platform or support. They comply, therefore, exactly with the amount of three dimensional component called for at arbitrarily established measurement stations, which are set by the software. The amount of overlap along the edges of each section of, first the lower and then the upper and lower films 12, 54 obviously change as the passage over the platform or support 18 introduces the three dimensional component to the films and resin.

As an example, one section of the platform, when a measurement point at twenty-five (25) percent of the distance from foot to head passes over it, will automatically assume the three dimensional definition which is called for at this exact twenty-five (25) percent point by the software. Because the carrier is always moving in the machine direction, the convexity of segments 66 of the platform is always changing. Forward motion in the machine direction and arching and flattening movement of the segments 66 of the platform are maintained in absolute concert by the software.

After the top film 54 has been applied over the coating 31, the lubricating oil sprayed or flowed thereon acts as a lubricant to minimize friction as the calenders 60 bear thereon. To apply controlled down pressure springs or air cylinders may be employed to urge the calenders 60 against the top film 54, and the calenders 60 have the same curvature as the underlying segment 66.

Immediately upon exiting the calendering station 60, the assembly of the carriers with the resin and fibers therebetween passes through the curing station 62 to effect at least partial curing of the coating in the contours which have been generated therein by the movable segments 66 of the platform 18. The curing produced by the curing mechanism 62 is regulated by the software which will regulate the radiation commensurate with the speed of the assembly therethrough.

If the curing is complete, after the head, of the sail has cleared the curing mechanism, the forward motion of carrier and resin may stop. The top film 54 is removed, and the completed sail body is removed from the carrier film 12.

If small fibers are desired in the sail body, it is anticipated that it may, as production experience is gained, be advantageous to preliminary mix very small fibers with the resin and to dispense the two simultaneously. However, the preferred procedure utilizes transverse reinforcing yarns which can replace the small fibers for providing tear resistance.

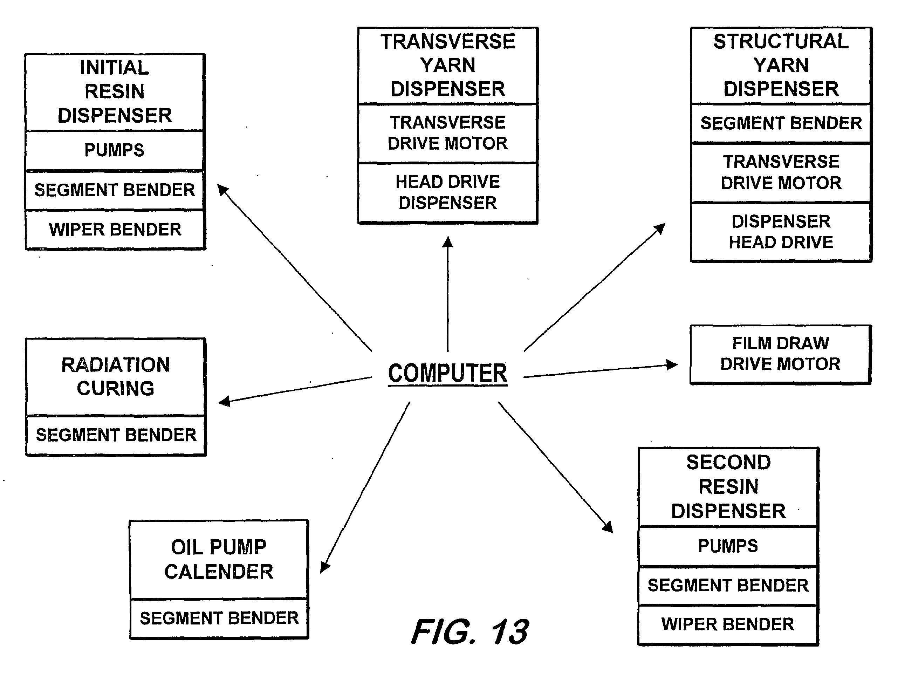

As will be readily appreciated, the various motors, pumps, valves and other operable components are controlled by the computer as schematically illustrated in Figure 13.

The carrier film and top film utilized in the present application are made of a resin providing a high degree of flexure and strength, and of a chemistry to which the resin coating will not adhere. Polyesters have been found highly suitable and polyethylene terephthalate film having a thickness of 0.003-0.005 (0,076-0,127 mm) inch is conveniently utilized. The rolls of film are preferably on the order of 5-7 feet (1,5-2,1mts) in width so as to minimize the number of strips of film which must be fed onto the support and drawn along the length thereof.

The resin utilized for forming the coating and, ultimately the body of the sail, should be one which produces a film which is highly flexible, durable, and resistant to ultraviolet ray degradation. Flexible polyurethanes are considered to have optimum properties for this application.

The thickness of the resin coating will depend upon the desired thickness for the sail which, in turn, will depend upon the size of the sail and the forces to which it will be subjected. Obviously, a sail to endure fluttering in high wind loads will generally call for some increase in thickness of the sail although the structural yarns carry the bulk of the load. Generally, the sail thickness will vary within the range of 3/32-6/32 inch (2,38-4,76 mm), with 4/32-5/32 (3,17-3,96 mm) inch being preferred for cruising sails.

The reinforcing yarns are preferably a high modulus polyester which is untwisted and having a generally flat configuration within the range of 1000-2000 denier. A polyester yarn which is presently considered to be highly satisfactory is that offered for sale by Acordis Industrial Fiber, Inc, under the designation Diolen 1100 174S 2200.

The structural yarns are also a high modulus material having a flat configuration and untwisted, and preferably within the range of 2200-5000 denier. Illustrative of suitable materials are those sold under the mark VECTRAN and designated 1500/300 by Celanese Advanced Materials which is described as a liquid crystal polymer yarn. Another suitable resin fiber is an aramid fiber sold by Teijin Twaron USA, Inc. under the designation 2200 and aramid fiber sold by DuPont under the trademark KEVLAR.

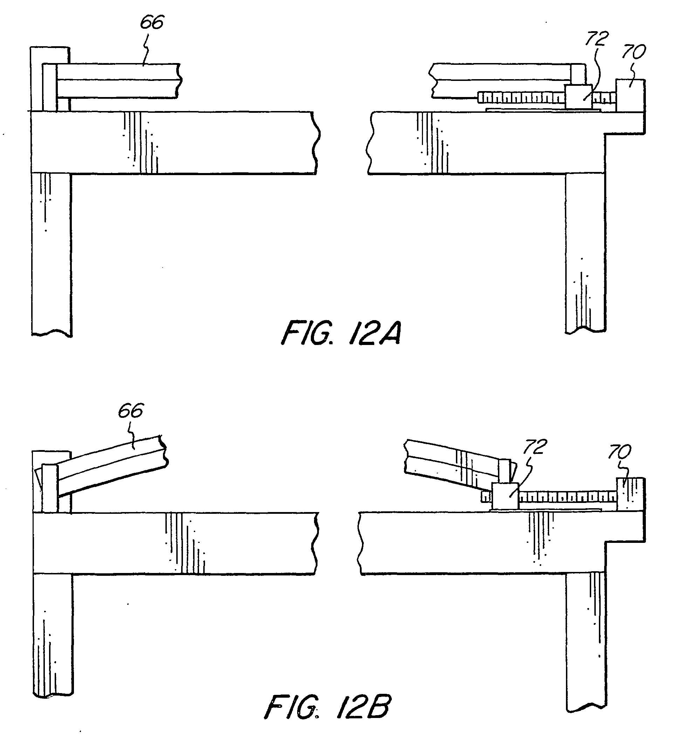

As seen in Figure 12, the segments 66 of the carrier support 18 are individually adjustable to the desired convex curve by actuation of the motor 70 at one end of the segment while the other end is fixed in position. The motor 70 drives a gear assembly 72 which moves the clamp in which the movable end is secured. Moving the movable end towards the fixed end causes the segment 66 to arch upwardly to provide a convexly curved surface over which the carrier 12 is draped. This curve will be varied to conform to the curvature (or lack thereof) for the portion of the sail being generated as it passes thereover.

The elongated segments are flexible and are conveniently fabricated from glass reinforced epoxy resin in a width of 0.4-1.5 feet (0,12-0,45 mts), and a thickness of 2-4 inch (5,08-10,16 cm). They can be of uniform cross section over their length or modified at selected portions along the length thereof to facilitate the forming of the desired curvature in that portion of the carrier and coating passing thereover.

Moreover, depending upon the sail dimensions and configuration, the segments may be readily changed to vary the flexural characteristics.

The wipers are conveniently fabricated from a flexible resin formulation such as glass reinforced epoxy or polytetrafluoroethylene and may be provided with a release coating to minimize adhesion of the liquid resin thereto. They desirably have a 3/16-3/8 (4,7-9,5 mm) inch cross section and a width of 1/2-1 (12,7-25,4 mm) inch and a height of 1/2-1 (12,7-25,4 mm) inch. One end is fixed and the other end is movable by a drive system similar to that for the segments of the support. The drive motor is operated to cause the wiper to assume the same curvature (or lack thereof) as that of the segment with which it is associated.

The calendering station similarly uses two or more spaced elongated flexible members of generally rectangular cross section fabricated of glass filled epoxy resin or polytetrafluoroethylene and having a thickness of 1/16-3/16 inch (1,58-4,7mm). They too may have a release coating thereon. These members are supported and flexed in the same manner as the segments and wipers, and the computer generates the same curvature as that of the support segment therebelow. In addition, solenoid, springs or air cylinders disposed thereabove apply a downward force of about 3-15 pounds per square inch (20,69-103,4 KPa) to provide the "squeegee" action upon the coating disposed between the carrier and top films.

The yarn wipers affixed to the yarn applicator heads are conveniently fabricated from glass reinforced epoxy resin with a channel in which the yarn travels and a length of about 1/2-1-1/2 inch (12,7-25,4 mm). As can be seen in Figure 1, they are angularly oriented in the trailing direction so that the web of the wiper will pass over the yarn and press it into the coating.

The depth of the initial coating will normally be about 40-60 percent of the total thickness. For lightweight sails, the higher end of this percentage will be preferred to provide sufficient depth to allow the yarns being applied to be "fixed" in position by the resin.

The dispensing conduits for the resin are flexible and have apertures therein which are dimensioned relative to the supply point to deliver equal volumes of resin along the length of that portion which is being utilized at any given point along the altitude of the sail being fabricated. Conveniently, the resin supply tubes are connected to the conduit at 1-3 foot (0,304-0,91 mts) intervals and the apertures are spaced at intervals of about 3-6 inches (7,62-15,24 cm).

The flow of resin through the supply tubes is controlled by the pumps and valves which can be opened or closed by the computer software depending upon the width of the coating required at any given point of the sail altitude and are changing dynamically as the carrier film passes thereunder.

Since the conduit should be located adjacent the surface of the carrier film, the conduit is fabricated of a flexible material such as glass filled epoxy and is flexed in the same manner and to the same configuration as the segments therebelow.

Various energy sources may be used to effect curing of the resin depending upon the resin system selected, including infrared radiation, ultraviolet radiation, microwave radiation and electron beams. Gas heaters may also be used for heat curing systems. With the preferred urethane resins and catalysts employed therewith, ultraviolet radiation is preferable. The resin coatings are relatively thin and the top film is transparent to the radiation so that curing throughout the coating can be quickly effected.

As the initial foot portion of the sail moves through the several stations, the width of the coating and the area in which yarns are applied is decreasing under computer control. The computer thus reduces the section of the resin conduits delivering rein for the coating as well as the number and location of yarn applicators.

If less than the full width of the support surface is to be used for making smaller sails, the operative portions of the several stations are centered on the midpoint of the width of the support. The number of film feed rolls is limited to that required for the maximum width of the sail, and the resin feed to the dispensing conduits is limited. The yarn applicators actuated are those in the sail area then being formed.

Following the trimming of the sail body, various finishing operations may be conducted in a conventional manner. For large head sails, it may be desirable to bond a reinforcing panel across the foot of the sail, and this panel should include structural yarns extending between the clew and tack. The resin employed for this foot panel is desirably the same as that used for the sail body and any compatible adhesive may be used to effect the bonding.

Other elements which are bonded to the sail body are pulpit patches, clew and tack reinforcing patches and rings, spreader patches, batten pockets, head plates and patches, reefing tapes and grommets, etc. The resin employed for the patches and tapes is preferably the same as employed for the sail body.

The computer software takes the designer's input as to the type of sail (head or main), maximum operating wind velocity, operative dimensions, camber and draft, and desired thickness and then calculates the convexity at various points along the altitude of the sail and the number and placement of the structural yarns. Based upon this input, the computer controls the pumps for the resin, the motors to flex the support segments, wipers, conduits and calenders, and the motors feeding the yarn applicator heads to make the changes necessary for those operative elements of the installation as the carrier and coating move into alignment therewith.

In a general sense, the novel process described herein is motion intensive and yields the complete seamless body of a sail. All that is required at the end of the forming steps of the process is, perhaps and depending upon exactly what specific polymer is used, a further curing stage. The essence of this process is motion itself, since the elements characterizing the essence and detail of the sail - its form and its structural and reinforcing components providing its internal structure, and its skin, are incorporated contemporaneously.

Throughout the process, as the carrier and resin move in the machine direction, they are moving across segments of what is called a support table. As indicted previously, each segment of that support table is automatically set by a computer driven mechanism to exactly that form required by the portion of the sail which is moving over it at any given moment. Viewed in the machine direction, the motion of the segments of the support table resembles that of a wave. As the portion of the carrier and coating representing the sail's lowest transverse section (foot) moves from the first table segment to the second, the first table segment automatically assumes the form of the sail's next to the lowest transverse segment, and so on until carrier and sail have completely passed the forming table's last segment. It can be said, therefore, that it is the essentially continuous and multifaceted motion during the application of materials within the realm of this motion which enables the efficient and extremely high quality formation of the sail body.

Illustrative of the present invention is the following example.

### EXAMPLE

A sail designer provides the following data for a 150% Genoa jib for a 35 foot (10,66 mts) cruising sailboat.

The dimension of the Finished Leading Edge Length - (approximately 49.0') (15 mts).

The dimension of the sail plan's Foretriangle Base - (15.5') (4,69 mts).

The Finished Leading Edge Perpendicular expressed as percentage of the sail plan's Foretriangle Base - (150%).

The height of this sail is then 49.0' (15 mts) and its approximate width is 22.5' (6.82 mts)

This information is entered into the computer.

Using a casting installation substantially as shown in Figure 4, the unwind apparatus is configured to feed 5 foot wide polyester film from 5 roll stands with an overlap of 3 inches. Polyurethane resin is employed for the coating, specifically a resin formulation sold by PTM&W Industries, Inc. of Santa Spring, California under No. PR7660.

The ends of the carrier film are clamped in the puller device, Resin is deposited on the carrier to a depth of 1/32 - 3/32 (0,8-2,38 mm) inch and transversely over the overlapping films for 22.5 feet (6,82 mts) representing the foot of the sail as the film is being drawn at a rate of 15 feet (4,57 mts) per minute. Untwisted polyester yarns Acordis diolin type 174S 1,100 Dtex are deposited generally transversely across the foot portion and thence diagonally between leech and luff throughout the sail.

Structural yarns Teijin twaron aramid filament yarn type 2200, 3220 DTEX and 2420 DTEX, and Celanese Vectran type HS2250denier 450 filament count are thereafter laid over the reinforcing yarns starting at the clew and extending to the luff edge and to the head of the sail, in a pattern similar to that seen in Figure 1.

After the application of the structural yarns, additional resin is deposited to provide a coating depth of 2/32 - 5/32 inch (1,58-3,96 mm) and to completely encapsulate the yarn. The coating is then wiped to smooth the surface, and polyester film is drawn over the coating and pressed thereonto to provide a top film.

This film assembly is then passed under a light oil dispenser and then a pair of calendering blades to smooth the resin layer and expel air therefrom. The film assembly then passes under an array of UV lamps to effectuate curing of the resin.

Following the irradiation, the assembly is moved onto a planar support where the resin is allowed to cure completely for 5 hours. The carrier and top films are stripped from the sail body which is found to have smooth surfaces with the yarns completely encapsulated therein.

The sail body is then moved to a finishing station for further processing.

Thus, it can be seen from the foregoing detailed specification and attached drawings that a durable and attractive sail with a seamless body can be produced quickly and economically. The sail is resistant to tearing and able to withstand high tensile loads.

## Claims

1. A method of fabricating a sail having a foot with a clew (4) and a tack and a head (6), and luff (7) and leech edges extending therebetween comprising:
(a) transporting a flexible carrier (12) over a segmented support (18);
(b) depositing on said carrier (12) a coating (31) of liquid synthetic resin in a predetermined pattern conforming substantially to the desired configuration for the sail;
(c) moving the segments (66) of said support (18) to shape said carrier (12) and coating (31) into the predetermined contour for the transverse portion of the sail disposed thereon concurrently with passage of said carrier (12) thereover, said segments being formed progressively over the length of said support (18) to conform with the predetermined contours of the sail being fabricated and passing thereover;
(d) depositing on said coating (31) structural yarns (40) in a predetermined pattern;
(e) applying additional liquid synthetic resin to a desired depth for the coating (31) corresponding substantially to the desired thickness for the sail and to encapsulate said structural yarns (40);
(f) at least partially curing said resin on said carrier (12) to produce a composite sail structure having the desired configuration and contours, said structural yarns (40) being embedded in said at least partially cured resin;
(g) removing said composite sail structure from said carrier (12); and
(h) trimming said sail structure to conform to the desired tri-cornered sail.

2. The method of making a tri-cornered sail in accordance with Claim 1 wherein said resin is initially deposited on said carrier (12) as it is being transported in a width corresponding substantially to the predetermined foot of the sail and wherein the width of the liquid synthetic resin coating (31) being deposited on said carrier is gradually reduced until deposition is terminated at the predetermined head (6)of the sail.

3. The method of making a tri-cornered sail in accordance with Claim 1 wherein there is included the step of smoothing the deposited resin coating (31) to a desired thickness before the step of depositing said structural yarns (40).

4. The method of making a tri-cornered sail in accordance with Claim 3 wherein the carrier (12) is formed by said segments (66) to the desired transverse curvature prior to the smoothing step and said smoothing is effected by a wiper (32) having a curvature conforming to the predetermined transverse curvature of the sail at the location of said wiper (32).

5. The method of making a tri-cornered sail in accordance with Claim 1 wherein said step of depositing said structural yarns (40) includes wiping said structural yarns (40) onto said coating (31).

6. The method of making a tri-cornered sail in accordance with Claim 5 wherein some of said structural yarns (40) extend from the clew (4) to the head (6) of said sail.

7. The method of making a tri-cornered sail in accordance with Claim 5 wherein some of said structural yarns (40) extend from the clew (4) to a multiplicity of points along the luff edge (7) of said sail.

8. The method of making a tri-cornered sail in accordance with Claim 1 including the step of depositing reinforcing yarns (36) in said coating (31) prior to the step of depositing structural yarns (40) in said coating (31), said reinforcing yarns (36) generally extending transversely between said leach and luff (7).

9. The method of making a tri-cornered sail in accordance with Claim 1 wherein said reinforcing yarns (36) are angularly oriented relative to the horizontal.

10. The method of making a tri-cornered sail in accordance with Claim 1 wherein the width of said carrier (12) is comprised of overlapping strips.

11. The method of making a tri-cornered sail in accordance with Claim 1 wherein there is included the step of initiating a partial cure of the resin includes exposing the resin of at least said coating (31) to ultraviolet radiation.

12. The method of making a tri-comered sail in accordance with Claim 1 wherein there are included the steps of (a) applying over said coating (31) a flexible top film (54), (b) depositing a viscous liquid release agent on the surface of said top film (54), and (c) calendering the assembly of the films (12, 54) and coating (31).

13. The method of making a tri-comered sail in accordance with Claim 12 wherein said assembly of films (12, 54) and coating (31) is removed from said support (18) and said resin is allowed to cure completely prior to removal of said carrier (12) and top films (54) from said sail structure and prior to said trimming step.

14. The method of making a tri-comered sail in accordance with Claim 1 wherein additional elements are applied to said sail structure following removal of said film (12, 54) and said trimming steps.

15. The method of making a tri-cornered sail in accordance with Claim 1 wherein one of said additional elements is a reinforcing panel applied and bonded along the foot of the sail, said panel including reinforcing yarns (36) between said tack and clew (4).

16. The method of making a tri-cornered sail in accordance with Claim 14 wherein additional element include reinforcing strips applied and bonded to said body at the desired locations for reef points and wherein apertures are cut therein and grommets bonded therein.

17. The method of making a tri-comered sail in accordance with Claim 1 wherein there is included a step of depositing and embedding small fibers (36) in said coating (31).

18. The method of making a tri-cornered sail in accordance with Claim 1 wherein said assembly of films (12, 54) and coating (31) is hung vertically for a period of time to ensue complete curing of said resin of said coating (31).

19. A tri-cornered sail casting installation comprising:
(a) roll support (14) means for supporting at least one roll (16) of carrier film;
(b) a segmented support (18) comprised of a multiplicity of movable segments (66) which provide a planar support surface and are movable to provide a transversely curved support surface;
(c) drive means for moving said segments (66) in accordance with predetermined movements to generate the desired transverse curvature in the carrier film (12) passing thereover;
(d) carrier film pulling means for unrolling carrier film and moving it onto and over the length of said elongated support in a machine direction;
(e) drive means (20) for said pulling means;
(f) liquid resin dispensing means (28) above said support (18) for dispensing liquid resin to provide a coating (31) of liquid resin on the carrier film (12) in a predetermined width which is variable to reflect the intended transverse dimension of the body of the sail being cast on the carrier film (12) as it moves thereby;
(g) transverse yam laying means (38) above said support (18) for laying synthetic resin yarns (36) into the resin coating (31), said laying means (38) being movable generally transversely of said support (18);
(h) structural yam laying means (39) above said support for laying into the resin coating (31) a multiplicity of synthetic resin yarns (40) in a predetermined pattern extending generally in the machine direction;
(i) second liquid resin dispensing means (48) above said support (18) for dispensing liquid resin onto the coating (31) to provide a predetermined thickness for the coating (31) and to fully encapsulate said yarns (36, 40);
(j) top film applying means (52) for applying a top film (54) over the coating (31) and yarns (36, 40);
(k) calendering means (60) for calendering the assembly of films (12, 54), coating (31) and yarns (36, 40); and
(l) curing means (62, 64) for applying energy to the resin of the coating (31) to effect at least partial curing thereof.

20. The tri-cornered sail casting installation in accordance with Claim 19 wherein said roll support means (14) supports multiple rolls (16) of carrier film and said drive means (20) pulls film (12) from said rolls (16) with the edges thereof overlapping on said support (18).

21. The tri-cornered sail casting installation in accordance with Claim 19 wherein said transverse yam laying means (38) presses the transverse yarns (36) into said coating (31).

22. The tri-cornered sail casting installation in accordance with Claim 19 wherein said structural yarns laying means (39) wipes the structural yarns (40) onto said coating (31).

23. The tri-cornered sail casting installation in accordance with Claim 19 wherein there is included wiper means (32) following said first mentioned dispensing means (28) for leveling said coating (31) to the desired thickness.

24. The tri-cornered sail casting installation in accordance with Claim 23 wherein said wiper (32) means is configurable to conform to the curvature of the support (18) thereunder.

25. The tri-cornered sail casting installation in accordance with Claim 19 wherein said calendering means (60) is configurable to conform to the curvature of the support (18) thereunder.

26. The tri-cornered sail casting installation in accordance with Claim 19 wherein said structural yam laying means (39) is movable transversely of said support (18).

27. The tri-cornered sail casting installation in accordance with Claim 19 wherein said transverse yam laying means (38) is movable transversely of said support (18).

28. A cast tri-cornered sail having a foot with a clew (4) and a tack, a head (6) and luff (7) and leech edges extending therebetween, said sail including an integrally formed, seamless cast body; **characterised in that**
said body has substantially smooth surfaces and a synthetic resin matrix in which are embedded structural yarns (40) extending from the clew to the head and to the luff edge.

29. The cast tri-cornered sail in accordance with Claim 28 wherein said synthetic resin of said matrix is a thermosetting resin and wherein said structural yarns (40) are fabricated from a high modulus thermosetting resin.

30. The cast tri-cornered sail in accordance with Claim 28 wherein there are included a multiplicity of reinforcing yarns (36) extending generally transversely from luff (7) to leech.

31. The cast tri-cornered sail in accordance with Claim 30 wherein said reinforcing yarns (36) are angularly oriented relative to said edges of the sail.

32. The cast tri-cornered sail in accordance with Claim 28 wherein there are included reinforcing elements bonded to said body at said head (6) and said foot of said sail.

33. The cast tri-cornered sail in accordance with Claim 28 wherein there are included reef points and a reinforcing strip extending across said body from leech to luff (7) and said reef points are disposed therein.

34. The cast tri-cornered sail in accordance with Claim 28 wherein there is included a reinforcing panel bonded to said body and extending across said foot, said panel having structural yarns (40) embedded therein and extending between said tack and clew (4).

## Patentansprüche

1. Verfahren zum Herstellen eines Segels mit einem Fuß mit einem Schothorn (4) und einem Fockhals und einem Kopf (6) und einem Vorliek (7) und sich dazwischen erstreckenden Achterliekkanten, welches umfasst:
(a) Transportieren eines beweglichen Trägers (12) über eine unterteilte Auflage (18);
(b) Aufbringen einer Beschichtung (31) aus flüssigem Kunstharz in einem festgelegten Muster, das im Wesentlichen der für das Segel gewünschten Auslegung entspricht, auf dem Träger (12);
(c) Bewegen der Abschnitte (66) der Auflage (18), um den Träger (12) und die Beschichtung (31) in der festgelegten Kontur für den auf dem Segel angeordneten querlaufenden Abschnitt gleichzeitig mit dem Passieren des Trägers (12) darüber zu formen, wobei die Abschnitte abschnittsweise über die Länge der Auflage (18) ausgebildet werden, um den festgelegten Konturen des hergestellten und darüber passierenden Segels zu entsprechen;
(d) Aufbringen von Strukturgarnen (40) auf der Beschichtung (31) in einem festgelegten Muster;
(e) Auftragen von zusätzlichem flüssigen Kunstharz auf eine für die Beschichtung (31) gewünschte Tiefe, die im Wesentlichen der für das Segel gewünschten Dicke entspricht, und um das Strukturgarn (40) einzukapseln;
(f) zumindest teilweises Härten des Harzes auf dem Träger (12), um eine Verbundsegelanordnung mit der gewünschten Auslegung und den gewünschten Konturen herzustellen, wobei die Strukturgarne (40) in dem zumindest teilweise gehärteten Harz eingebettet ist;
(g) Entfernen der Verbundsegelanordung von dem Träger (12); und
(h) Zuschneiden der Segelstruktur, um dem gewünschten dreieckigen Segel zu entsprechen.

2. Verfahren zum Herstellen eines dreieckigen Segels nach Anspruch 1, **dadurch gekennzeichnet, dass** das Harz zunächst auf dem Träger (12) aufgebracht wird, während es in einer im Wesentlichen dem festgelegten Fuß des Segels entsprechenden Breite transportiert wird, und dass die Breite der auf dem Träger aufgebrachten flüssigen Kunstharzbeschichtung (31) allmählich reduziert wird, bis das Aufbringen an dem festgelegten Kopf (6) des Segels beendet wird.

3. Verfahren zum Herstellen eines dreieckigen Segels nach Anspruch 1, **dadurch gekennzeichnet, dass** der Schritt des Glättens der aufgebrachten Harzbeschichtung (31) in einer gewünschten Dicke vor dem Schritt des Aufbringens der Strukturgarne (40) enthalten ist.

4. Verfahren zum Herstellen eines dreieckigen Segels nach Anspruch 3, **dadurch gekennzeichnet, dass** der Träger (12) vor dem Glättungsschritt durch die Abschnitte (66) zu der gewünschten querlaufenden Krümmung geformt wird und die Glättung durch einen Abstreifer (32) mit einer der festgelegten querlaufenden Krümmung des Segels an der Stelle des Abstreifers (32) entsprechenden Krümmung bewirkt wird.

5. Verfahren zum Herstellen eines dreieckigen Segels nach Anspruch 1, **dadurch gekennzeichnet, dass** der Schritt des Aufbringens der Strukturgarne (4) das Abstreifen der Strukturgarne (40) auf die Beschichtung (31) umfasst.

6. Verfahren zum Herstellen eines dreieckigen Segels nach Anspruch 5, **dadurch gekennzeichnet, dass** sich die Strukturgarne (40) von dem Schothorn (4) zum Kopf (6) des Segels erstrecken.

7. Verfahren zum Herstellen eines dreieckigen Segels nach Anspruch 5, **dadurch gekennzeichnet, dass** sich einige der Strukturgarne (40) von dem Schothorn (4) zu mehreren Punkten entlang der Vorliekkante (7) des Segels erstrecken.

8. Verfahren zum Herstellen eines dreieckigen Segels nach Anspruch 1, welches den Schritt des Aufbringens von Verstärkungsgarnen (36) in der Beschichtung (31) vor dem Schritt des Aufbringens von Strukturgarnen (40) in der Beschichtung (31) umfasst, wobei sich die Verstärkungsgarne (36) allgemein quer zwischen dem Achterliek und Vorliek (7) erstrecken.

9. Verfahren zum Herstellen eines dreieckigen Segels nach Anspruch 1, **dadurch gekennzeichnet, dass** die Verstärkungsgarne (36) im Verhältnis zur Horizontalen bei einem Winkel ausgerichtet sind.

10. Verfahren zum Herstellen eines dreieckigen Segels nach Anspruch 1, **dadurch gekennzeichnet, dass** die Breite des Trägers (12) aus überlappenden Streifen besteht.

11. Verfahren zum Herstellen eines dreieckigen Segels nach Anspruch 1, **dadurch gekennzeichnet, dass** der Schritt des Einleitens einer teilweisen Härtung des Harzes das Einwirken ultravioletter Strahlung auf das Harz mindestens der Beschichtung (31) umfasst.

12. Verfahren zum Herstellen eines dreieckigen Segels nach Anspruch 1, **dadurch gekennzeichnet, dass** die Schritte
a) des Auftragens einer flexiblen obersten Schicht (54) über die Beschichtung (31),
b) des Aufbringens eines viskosen flüssigen Trennmittels auf der Fläche der obersten Schicht (54) und
c) des Kalandrierens der Anordnung der Schichten (12, 54) und der Beschichtung (31)
enthalten sind.

13. Verfahren zum Herstellen eines dreieckigen Segels nach Anspruch 12, **dadurch gekennzeichnet, dass** die Anordnung der Schichten (12, 54) und der Beschichtung (31) von der Auflage (18) entfernt wird und dem Harz vor dem Entfernen des Trägers (12) und der obersten Schicht (54) von der Segelanordnung und vor dem Schritt des Zuschneidens ein vollständiges Härten ermöglicht wird.

14. Verfahren zum Herstellen eines dreieckigen Segels nach Anspruch 1, **dadurch gekennzeichnet, dass** nach dem Entfernen der Schicht (12, 54) und dem Schritt des Zuschneidens zusätzliche Elemente an der Segelstruktur angebracht werden.

15. Verfahren zum Herstellen eines dreieckigen Segels nach Anspruch 1, **dadurch gekennzeichnet, dass** eines der zusätzlichen Elemente eine verstärkende Platte ist, die entlang des Fußes des Segels angebracht und befestigt ist, wobei die Platte Verstärkungsgarne (36) zwischen dem Fockhals und Schothorn (4) umfasst.

16. Verfahren zum Herstellen eines dreieckigen Segels nach Anspruch 14, **dadurch gekennzeichnet, dass** zusätzliche Elemente verstärkende Streifen umfassen, die an gewünschten Stellen für Reffpunkte angebracht und befestigt sind und dass darin Öffnungen geschnitten sind und Seilschwingen darin befestigt sind.

17. Verfahren zum Herstellen eins dreieckigen Segels nach Anspruch 1, **dadurch gekennzeichnet, dass** ein Schritt des Aufbringens und Einbettens von kleinen Fasern (36) in der Beschichtung (31) enthalten ist.

18. Verfahren zum Herstellen eines dreieckigen Segels nach Anspruch 1, **dadurch gekennzeichnet, dass** die Anordnung der Schichten (12, 54) und der Beschichtung (31) über einen Zeitraum senkrecht aufgehängt werden, um die vollständige Härtung des Harzes der Beschichtung (31) sicherzustellen.

19. Gießvorrichtung für dreieckige Segel, welche umfasst:
a) Rollenauflagemittel (14) zum Auflegen mindestens einer Rolle (16) Trägerfilms;
b) eine unterteilte Auflage (18) bestehend aus mehreren beweglichen Abschnitten (66), die eine ebene Auflagefläche vorsehen und beweglich sind, um eine quer gekrümmte Auflagefläche vorzusehen;
c) Antriebsmittel zum Bewegen der Abschnitte (66) gemäß festgelegten Bewegungen, um beim Passieren darüber die gewünschte Querkrümmung in dem Trägerfilm (12) zu erzeugen;
d) Trägerfilmzugmittel zum Abrollen des Trägerfilms und zum Bewegen desselben auf und über die Länge der länglichen Auflage in einer Maschinenrichtung;
e) Antriebsmittel (20) für die Zugmittel;
f) Mittel (28) zum Abgeben des flüssigen Harzes über der Auflage (18) zum Abgeben flüssigen Harzes, um eine Beschichtung (31) aus flüssigem Harz auf dem Trägerfilm (12) in einer festgelegten Breite vorzusehen, die veränderlich ist, um die Sollquerabmessung des Segelkörpers, der auf den Trägerfilm (12) gegossen wird, wiederzugeben;
g) Querverlaufende Garnlegemittel (38) über der Auflage (18) zum Legen synthetischer Harzgarne (36) in die Harzbeschichtung (31), wobei die Legemittel (38) allgemein quer zur Auflage (18) beweglich sind;
h) Stukturgarnlegemittel (39) über der Auflage (18) zum Legen von mehreren synthetischen Harzgarnen (40) in die Harzbeschichtung (31) in einem festgelegten Muster, das sich allgemein in die Maschinenrichtung erstreckt;
i) zweite Mittel (48) zum Abgeben von flüssigem Harz über der Auflage (18) zum Abgeben von flüssigem Harz auf der Beschichtung (31), um eine festgelegte Dicke für die Beschichtung (31) vorzusehen und um die Garne (36, 40) vollständig einzukapseln;
j) Mittel zum Aufbringen der obersten Schicht (52) zum Aufbringen einer obersten Schicht (54) über der Beschichtung (31) und den Garnen (36, 40);
k) Kalandrierungsmittel (60) zum Kalandrieren des Aufbaus aus Schichten (12, 54), Beschichtung (31) und Garnen (36, 40); und
l) Härtungsmittel (62, 64) zum Anlegen von Energie an dem Harz der Beschichtung (31), um zumindest eine teilweise Härtung desselben zu bewirken.

20. Gießvorrichtung für dreieckige Segel nach Anspruch 19, **dadurch gekennzeichnet, dass** das Rollenauflagemittel (14) mehrere Rollen (16) von Trägerfilm trägt und die Antriebsmittel (20) von den Rollen (16) Film (12) ziehen, wobei dessen Kanten auf der Auflage (18) überlappen.

21. Gießvorrichtung für dreieckige Segel nach Anspruch 19, **dadurch gekennzeichnet, dass** das querlaufende Garnlegemittel (38) die querlaufenden Garne (36) in die Beschichtung (31) presst.

22. Gießvorrichtung für dreieckige Segel nach Anspruch 19, **dadurch gekennzeichnet, dass** das Strukturgarnlegemittel (39) die Strukturgarne (40) auf die Beschichtung (31) abstreift.

23. Gießvorrichtung für dreieckige Segel nach Anspruch 19, **dadurch gekennzeichnet, dass** ein Abstreifmittel (32) enthalten ist, das auf die zuerst erwähnten Abgabemitteln (28) zum Einebnen der Beschichtung (31) auf die gewünschte Dicke folgt.

24. Gießvorrichtung für dreieckige Segel nach Anspruch 23, **dadurch gekennzeichnet, dass** das Abstreifmittel (32) konfigurierbar ist, um der Krümmung der Auflage (18) darunter zu entsprechen.

25. Gießvorrichtung für dreieckige Segel nach Anspruch 19, **dadurch gekennzeichnet, dass** das Kalandrierungsmittel (60) konfigurierbar ist, um der Krümmung der Auflage (18) darunter zu entsprechen.

26. Gießvorrichtung für dreieckige Segel nach Anspruch 19, **dadurch gekennzeichnet, dass** das Strukturgarnlegemittel (39) quer zu der Auflage (18) beweglich ist.

27. Gießvorrichtung für dreieckige Segel nach Anspruch 19, **dadurch gekennzeichnet, dass** das querlaufende Garnlegemittel (38) quer zu der Auflage (18) beweglich ist.

28. Gegossenes dreieckiges Segel mit einem Fuß mit einem Schothorn (4) und einem Fockhals, einem Kopf (6) und einem Vorliek (7) und sich dazwischen erstreckenden Achterliekkanten, wobei das Segel einen einstückig ausgebildeten nahtlosen Gießkörper umfasst, **dadurch gekennzeichnet, dass** der Körper im Wesentlichen ebene Flächen und eine Kunstharzmatrix aufweist, in denen Strukturgarne (40) eingebettet sind, die sich von dem Schothorn zu dem Kopf und zu der Vorliekkante erstrecken.

29. Gegossenes dreieckiges Segel nach Anspruch 28, **dadurch gekennzeichnet, dass** das Kunstharz der Matrix ein duroplastisches Harz ist, wobei die Strukturgarne (40) aus einem duroplastischen Harz hohen Moduls hergestellt ist.

30. Gegossenes dreieckiges Segel nach Anspruch 28, **dadurch gekennzeichnet, dass** mehrere Verstärkungsgarne (36) enthalten sind, die sich allgemein quer vom Vorliek (7) zum Achterliek erstrecken.

31. Gegossenes dreieckiges Segel nach Anspruch 30, **dadurch gekennzeichnet, dass** die Verstärkungsgarne (36) bezüglich der Segelkanten bei einem Winkel ausgerichtet sind.

32. Gegossenes dreieckiges Segel nach Anspruch 28, **dadurch gekennzeichnet, dass** Verstärkungselemente, die mit dem Körper an dem Kopf (6) und dem Fuß des Segels verbunden sind, enthalten sind.

33. Gegossenes dreieckiges Segel nach Anspruch 28, **dadurch gekennzeichnet, dass** Reffpunkte und ein Verstärkungsstreifen enthalten sind, der sich über den Körper von Achterliek zu Vorliek (7) erstreckt, und die Reffpunkte darin angeordnet sind.

34. Gegossenes dreieckiges Segel nach Anspruch 28, **dadurch gekennzeichnet, dass** eine mit dem Körper verbundene und sich über den Fuß erstreckende Verstärkungsplatte enthalten ist, wobei die Platte darin eingebettete Strukturgarne (40) aufweist und sich zwischen dem Fockhals und dem Schothorn (4) erstreckt.

## Revendications

1. Procédé de fabrication d'une voile possédant une bordure avec un point d'écoute (4) et un point d'amure et un point de drisse (6), et des bords d'envergure (7) et de chute s'étendant entre ceux-ci comprenant :
(a) transporter un porteur flexible (12) au dessus d'un support segmenté (18) ;
(b) déposer sur ledit porteur (12) un revêtement (31) de résine synthétique liquide selon un motif prédéterminé se conformant sensiblement à la configuration souhaitée pour la voile ;
(c) déplacer les segments (66) dudit support (18) pour donner une forme audit porteur (12) et au revêtement (31) pour obtenir le contour prédéterminé pour la partie transversale de la voile disposée sur celui-ci simultanément au passage dudit porteur (12) par-dessus ceux-ci, lesdits segments étant formés progressivement sur la longueur dudit support (18) pour se conformer aux contours prédéterminés de la voile en cours de fabrication et passer par-dessus ceux-ci ;
(d) déposer sur ledit revêtement (31) des fils structurels (40) selon un motif prédéterminé ;
(e) appliquer une résine synthétique liquide supplémentaire selon une profondeur souhaitée pour le revêtement (31) correspondant sensiblement à l'épaisseur souhaitée pour la voile et pour encapsuler lesdits fils structurels (40) ;
(f) durcir au moins partiellement ladite résine sur ledit porteur (12) pour produire une structure de voile composite possédant la configuration et les contours souhaités, lesdits fils structurels (40) étant encastrés dans ladite résine au moins partiellement durcie ;
(g) retirer ladite structure de voile composite à partir dudit porteur (12) ; et
(h) finir ladite structure de voile pour se conformer à la voile triangulaire souhaitée.

2. Procédé de fabrication d'une voile triangulaire selon la revendication 1, dans lequel ladite résine est initialement déposée sur ledit porteur (12) alors qu'il est en cours de transport dans une largeur correspondant sensiblement à la bordure prédéterminée de la voile et dans lequel la largeur du revêtement de résine synthétique liquide (31) en cours de dépôt sur ledit porteur est progressivement réduite jusqu'à ce que le dépôt soit terminé au point de drisse prédéterminé (6) de la voile.

3. Procédé de fabrication d'une voile triangulaire selon la revendication 1, dans lequel est incluse l'étape de lissage du revêtement de résine déposé (31) jusqu'à une épaisseur souhaitée avant l'étape de dépôt desdits fils structurels (40).

4. Procédé de fabrication d'une voile triangulaire selon la revendication 3, dans lequel le porteur (12) est formé par lesdits segments (66) pour obtenir la courbure transversale souhaitée avant l'étape de lissage et ledit lissage est effectué par un dispositif de raclage (32) possédant une courbure se conformant à la courbure transversale prédéterminée de la voile à l'emplacement dudit dispositif de raclage (32).

5. Procédé de fabrication d'une voile triangulaire selon la revendication 1, dans lequel ladite étape de dépôt desdits fils structurels (40) comprend le raclage desdits fils structurels (40) sur ledit revêtement (31).

6. Procédé de fabrication d'une voile triangulaire selon la revendication 5, dans lequel certains desdits fils structurels (40) s'étendent à partir du point d'écoute (4) jusqu'au point de drisse (6) de ladite voile.

7. Procédé de fabrication d'une voile triangulaire selon la revendication 5, dans lequel certains desdits fils structurels (40) s'étendent à partir du point d'écoute (4) jusqu'à une multiplicité de points le long du bord d'envergure (7) de ladite voile.

8. Procédé de fabrication d'une voile triangulaire selon la revendication 1, comprenant l'étape de dépôt de fils de renforcement (36) dans ledit revêtement (31) avant l'étape de dépôt des fils structurels (40) dans ledit revêtement (31), lesdits fils de renforcement (36) s'étendant de façon généralement transversale entre lesdites chute et envergure (7).

9. Procédé de fabrication d'une voile triangulaire selon la revendication 1, dans lequel lesdits fils de renforcement (36) sont orientés angulairement par rapport à l'horizontale.

10. Procédé de fabrication d'une voile triangulaire selon la revendication 1, dans lequel la largeur dudit porteur (12) est composée de bandes se chevauchant.

11. Procédé de fabrication d'une voile triangulaire selon la revendication 1, dans lequel est incluse l'étape de démarrage d'un durcissement partiel de la résine qui comprend l'exposition de la résine d'au moins ledit revêtement (31) à un rayonnement ultraviolet.

12. Procédé de fabrication d'une voile triangulaire selon la revendication 1, dans lequel sont incluses les étapes de : (a) appliquer par-dessus ledit revêtement (31) une pellicule supérieure flexible (54), (b) déposer un agent de décollage liquide visqueux sur la surface de ladite pellicule supérieure (54), et (c) calandrer l'assemblage des pellicules (12, 54) et du revêtement (31).

13. Procédé de fabrication d'une voile triangulaire selon la revendication 12, dans lequel ledit assemblage des pellicules (12, 54) et du revêtement (31) est retiré dudit support (18) et ladite résine est laissée durcir complètement avant de retirer ledit porteur (12) et lesdites pellicules supérieures (54) de ladite structure de voile et avant ladite étape de finition.

14. Procédé de fabrication d'une voile triangulaire selon la revendication 1, dans lequel des éléments supplémentaires sont appliqués sur ladite structure de voile à la suite du retrait de ladite pellicule (12, 54) et desdites étapes de finition.

15. Procédé de fabrication d'une voile triangulaire selon la revendication 1, dans lequel un desdits éléments supplémentaires est un panneau de renforcement appliqué et collé le long de la bordure de la voile, ledit panneau comprenant des fils de renforcement (36) entre ledit point d'amure et ledit point d'écoute (4).

16. Procédé de fabrication d'une voile triangulaire selon la revendication 14, dans lequel les éléments supplémentaires comprennent des bandes de renforcement appliquées et collées sur ledit corps aux emplacements souhaités pour des points de ris et dans lequel des ouvertures sont coupées dans celles-ci et des anneaux liés dans celles-ci.

17. Procédé de fabrication d'une voile triangulaire selon la revendication 1, dans lequel est incluse une étape de dépôt et d'encastrement de petites fibres (36) dans ledit revêtement (31).

18. Procédé de fabrication d'une voile triangulaire selon la revendication 1, dans lequel ledit assemblage de pellicules (12, 54) et de revêtement (31) est suspendu verticalement pendant un certain temps pour garantir le durcissement complet de ladite résine dudit revêtement (31).

19. Installation de coulée de voile triangulaire comprenant :
(a) des moyens de support de rouleau (14) pour supporter au moins un rouleau (16) de pellicule porteuse ;
(b) un support segmenté (18) composé d'une multiplicité de segments mobiles (66) qui fournissent une surface de support plane et sont mobiles pour fournir une surface de support transversalement courbée ;
(c) des moyens d'entraînement pour déplacer lesdits segments (66) selon des mouvements prédéterminés pour générer la courbure transversale souhaitée dans la pellicule porteuse (12) passant par-dessus ceux-ci ;
(d) des moyens de traction de pellicule porteuse pour dérouler la pellicule porteuse et la déplacer sur et par-dessus la longueur dudit support allongé dans un sens machine ;
(e) des moyens d'entraînement (20) pour lesdits moyens de traction ;
(f) des moyens de distribution de résine liquide (28) au-dessus dudit support (18) pour distribuer de la résine liquide pour fournir un revêtement (31) de résine liquide sur la pellicule porteuse (12) dans une largeur prédéterminée qui est variable pour réfléchir la dimension transversale prévue du corps de la voile en cours de coulée sur la pellicule porteuse (12) lorsqu'ils se déplacent ainsi ;
(g) des moyens de pose de fils transversaux (38) au-dessus dudit support (18) pour poser des lignes de résine synthétique (36) dans le revêtement de résine (31), lesdits moyens de pose (38) étant mobiles généralement transversalement audit support (18) ;
(h) des moyens de pose de fils structurels (39) au-dessus dudit support pour poser dans le revêtement de résine (31) une multiplicité de fils de résine synthétique (40) selon un motif prédéterminé s'étendant généralement dans le sens machine ;
(i) des seconds moyens de distribution de résine liquide (48) au-dessus dudit support (18) pour distribuer de la résine liquide sur le revêtement (31) pour fournir une épaisseur prédéterminée pour le revêtement (31) et pour encapsuler entièrement lesdits fils (36, 40) ;
(j) des moyens d'application de pellicule supérieure (52) pour appliquer une pellicule supérieure (54) par-dessus le revêtement (31) et les fils (36, 40) ;
(k) des moyens de calandrage (60) pour calandrer l'assemblage des pellicules (12, 54), du revêtement (31) et des fils (36, 40) ; et
(l) des moyens de durcissement (62, 64) pour appliquer de l'énergie à la résine du revêtement (31) pour effectuer un durcissement au moins partiel de celle-ci.

20. Installation de coulée de voile triangulaire selon la revendication 19, dans laquelle lesdits moyens de support de rouleau (14) supportent de multiples rouleaux (16) de pellicule porteuse et lesdits moyens d'entraînement (20) tirent la pellicule (12) à partir desdits rouleaux (16) avec les bords de celle-ci chevauchant ledit support (18).

21. Installation de coulée de voile triangulaire selon la revendication 19, dans laquelle lesdits moyens de pose de fils transversaux (38) compriment les fils transversaux (36) dans ledit revêtement (31).

22. Installation de coulée de voile triangulaire selon la revendication 19, dans laquelle lesdits moyens de pose de fils structurels (39) raclent les fils structurels (40) sur ledit revêtement (31).

23. Installation de coulée de voile triangulaire selon la revendication 19, dans laquelle sont inclus des moyens de raclage (32) à la suite desdits moyens de distribution (28) mentionnés en premier pour niveler ledit revêtement (31) selon l'épaisseur souhaitée.

24. Installation de coulée de voile triangulaire selon la revendication 23, dans laquelle lesdits moyens de raclage (32) sont configurables pour se conformer à la courbure du support (18) sous ceux-ci.

25. Installation de coulée de voile triangulaire selon la revendication 19, dans laquelle lesdits moyens de calandrage (60) sont configurables pour se conformer à la courbure du support (18) sous ceux-ci.

26. Installation de coulée de voile triangulaire selon la revendication 19, dans laquelle lesdits moyens de pose de fils structurels (39) sont mobiles transversalement dudit support (18).

27. Installation de coulée de voile triangulaire selon la revendication 19, dans laquelle lesdits moyens de pose de lignes transversales (38) sont mobiles transversalement audit support (18).

28. Voile triangulaire coulée possédant une bordure avec un point d'écoute (4) et un point d'amure, un point de drisse (6) et des bords d'envergure (7) et de chute s'étendant entre ceux-ci, ladite voile comprenant un corps coulé sans soudure formé d'un seul tenant ; **caractérisée en ce que**
ledit corps possède des surfaces sensiblement lisses et une matrice de résine synthétique dans laquelle sont encastrés des fils structurels (40) s'étendant à partir du point d'écoute jusqu'au point de drisse et jusqu'au bord d'envergure.

29. Voile triangulaire coulée selon la revendication 28, dans laquelle ladite résine synthétique de ladite matrice est une résine thermodurcissable et dans laquelle lesdits fils structurels (40) sont fabriqués à partir d'une résine thermodurcissable à haut module.

30. Voile triangulaire coulée selon la revendication 28, dans laquelle sont inclus une multiplicité de fils de renforcement (36) s'étendant généralement transversalement à partir de l'envergure (7) jusqu'à la chute.

31. Voile triangulaire coulée selon la revendication 30, dans laquelle lesdits fils de renforcement (36) sont orientés angulairement par rapport auxdits bords de la voile.

32. Voile triangulaire coulée selon la revendication 28, dans lequel sont inclus des éléments de renforcement collés audit corps au niveau dudit point de drisse (6) et de ladite bordure de ladite voile.

33. Voile triangulaire coulée selon la revendication 28, dans laquelle sont inclus des points de ris et une bande de renforcement s'étendant sur ledit corps à partir de la chute jusqu'à l'envergure (7) et lesdits points de ris sont disposés dans celle-ci.

34. Voile triangulaire coulée selon la revendication 28, dans laquelle est inclus un panneau de renforcement collé audit corps et s'étendant sur ladite bordure, ledit panneau possédant des fils structurels (40) encastrés dans celui-ci et s'étendant entre lesdits point d'amure et point d'écoute (4).
